# EUROPEAN PATENT SPECIFICATION

(11) **EP 3 070 717 B1**
(45) Date of publication and mention of the grant of the patent: **03.10.2018**
(21) Application number: 14861603.0
(22) Date of filing: 08.05.2014
(51) Int. Cl.: G21C 17/025, G21C 15/247

(54) **LIQUID METAL COOLED NUCLEAR REACTOR AND METHOD FOR MONITORING OXYGEN THERMODYNAMIC ACTIVITY**
FLÜSSIGMETALLGEKÜHLTER KERNREAKTOR UND VERFAHREN ZUR ÜBERWACHUNG DER THERMODYNAMISCHEN AKTIVITÄT
RÉACTEUR NUCLÉAIRE À AGENT CALOPORTEUR À MÉTAL LIQUIDE ET PROCÉDÉ DE RÉGULATION DE L'ACTIVITÉ THERMODYNAMIQUE DE L'OXYGÈNE

(30) Priority: 12.11.2013 RU 2013150258
(43) Date of publication of application: 21.09.2016
(73) Proprietor: Joint Stock Company "Akme-Engineering", Moscow 115035 (RU)
(72) Inventor: ASKHADULLIN, Radomir Shamilievich, g. Obninsk, Kaluzhskaya obl. 249030 (RU); IVANOV, Konstantin Dmitrievich, g. Obninsk, Kaluzhskaya obl. 249030 (RU); MARTYNOV, Petr Nikiforovich, g. Obninsk, Kaluzhskaya obl. 249030 (RU); STOROZHENKO, Aleksey Nikolaevich, g. Obninsk, Kaluzhskaya obl. 249034 (RU)
(74) Representative: Mitev, Mitko Karushkov
(86) International application number: PCT/RU2014/000331
(87) International publication number: WO 2015/072886

(56) References cited:
- CA-A- 919 778
- JP-A- 2001 264 476
- JP-A- 2003 075 401
- JP-A- 2003 130 988
- JP-A- 2003 279 398
- US-A- 3 565 769
- MARTYNOV P.N. ET AL.: 'Avtomatizirovannaya sistema upravleniya termodinamicheskoi aktivnostju kisloroda v svintsovom i svintsovo- vismutovom teplonositeliyakh.', [Online] 17 June 2011, page 98 Retrieved from the Internet: <URL:http://www.ippe.ru/podr/ippe1/ninf/8-0 9/12.pdf>

## Description

Nuclear reactor with liquid-metal coolant, oxygen thermodynamic activity monitoring system in such reactors and oxygen thermodynamic activity monitoring method.

### Field of the invention

The invention relates to nuclear power engineering and can be used in power units with liquid-metal coolants containing lead, in particular, in fast neutron reactors where heavy liquid-metal coolants (HLMC) are used in the first circuit - an eutectic alloy 44.5 %Pb-55.5 %Bi and lead, respectively.

HLMC peculiarity is its relatively high corrosiveness to structural materials.

That is why the main purposes of lead-bearing liquid-metal coolants technology that arise during their application are
- to ensure corrosion resistance of construction materials used in contact with lead-bearing liquid-metal coolant;
- to ensure necessary cleanness of the coolant itself and internal surfaces of loop circulation equipment (in order to avoid slagging of certain sections of the plant).

At the same time, the concentration of oxygen dissolved in HLMC essentially influences corrosion behavior of equipment and pipeline surfaces in contact with HLMC.

Due to lead and bismuth less oxophilicity in comparison with iron and chrome, relatively thin (1-10 µm) dense oxide films with good base adhesion form on steel surfaces in contact with lead and bismuth melt containing dissolved oxygen. When these films appear, corrosion resistance of construction materials increases significantly.

That is why the main protection method of construction materials in contact with HLMC is oxygen passivation (inhibition) of surfaces; the method involves creation and maintaining of oxide films on surfaces of materials.

Due to oxidic nature of films their condition during the plant operation much depends on the level of oxygen thermodynamic activity in coolant.

If concentration of oxygen dissolved in coolant (lead-bismuth, lead) decreases below the critical value, reliable corrosion protection of construction steels cannot be ensured.

On the other hand, presence of significant quantity of oxygen in coolant is undesirable as it can result in accumulation of prohibitive amount of solid phase oxides in coolant.

Everything above requires constant monitoring of maintaining preset values of oxygen thermodynamic activity in the coolant at any specified operation mode.

Known is a nuclear power plant that includes a nuclear power reactor with liquid-metal coolant, the housing of which has an active zone located below coolant level, steam generators, circulation pumps and a system of liquid-metal coolant condition monitoring that is performed by means of constant measurements of thermodymamic oxygen activity using one monitoring element immersed into coolant and connected to a measuring unit. [Martynov P. N., Askhadullin R. S., Simakov A. A. Establishment of an automatic control system of forecasting and monitoring the condition of the lead-bismuth (lead) coolant and surfaces of nuclear power plants circuits. Proceedings of the Third interbranch research and practice conference "Heavy liquid metal coolants in nuclear technologies". Obninsk. September 15-1, 2008. In two volumes. Obninsk, IPPE State Research Center, 2010. - Vol. 1, 128-136].

However, the obtained data are not always objective, since they give no information about true values of oxygen thermodynamic activity in various parts of the circuit and in various operating conditions; which results in slagging and crystallization of oxide phases in "cold" parts of the nuclear plant circuit as well as in destruction of the protective oxide coatings on inner surfaces of structural materials in its "hot" areas.

Therefore, it is necessary to maintain oxygen thermodynamic activity in coolant at a certain level and provide a reliable and valid monitoring of this parameter in order to ensure reliable and safe operation of nuclear power plants with circulating liquid-metal coolant.

Besides, a common practice for gaining current information about the dependence of oxygen thermodynamic activity on the temperature is the change of the whole nuclear power plant operation mode (change of its power, coolant flow ate), that is extremely undesirable.

JP 2003 130988 A discloses a nuclear reactor with lead-bismuth coolant and a system of liquid metal condition monitoring containing an oxygen monitoring element located in the peripheral part of the reactor housing.

CA 919 778 A discloses a nuclear reactor containing liquid metal cooling and a plurality of oxygen analysers located in the liquid metal loops.

### Summary of the invention

Technical objective of the invention is to ensure constant monitoring of the preset values of oxygen thermodynamic activity in liquid-metal coolant and maintaining these values at any specified operation mode.

Technical result of the invention is to increase the reliability of the reactor operation by means of providing opportunities for continuous and reliable information about physical and chemical processes that occur in liquid-metal coolant in the reactor flow section.

The above mentioned result is achieved by a nuclear power reactor according to claim 1 and a method of oxygen monitoring according to claim 5.

### Brief description of the drawings

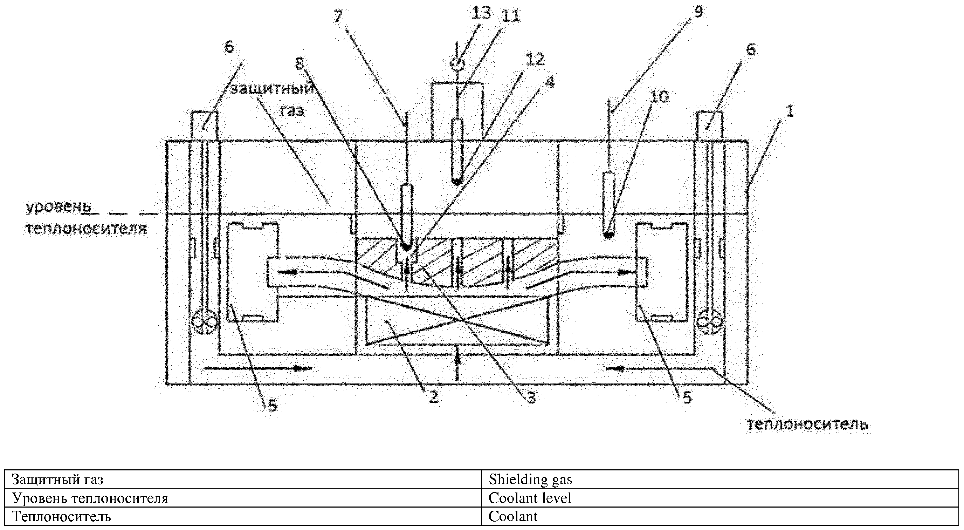

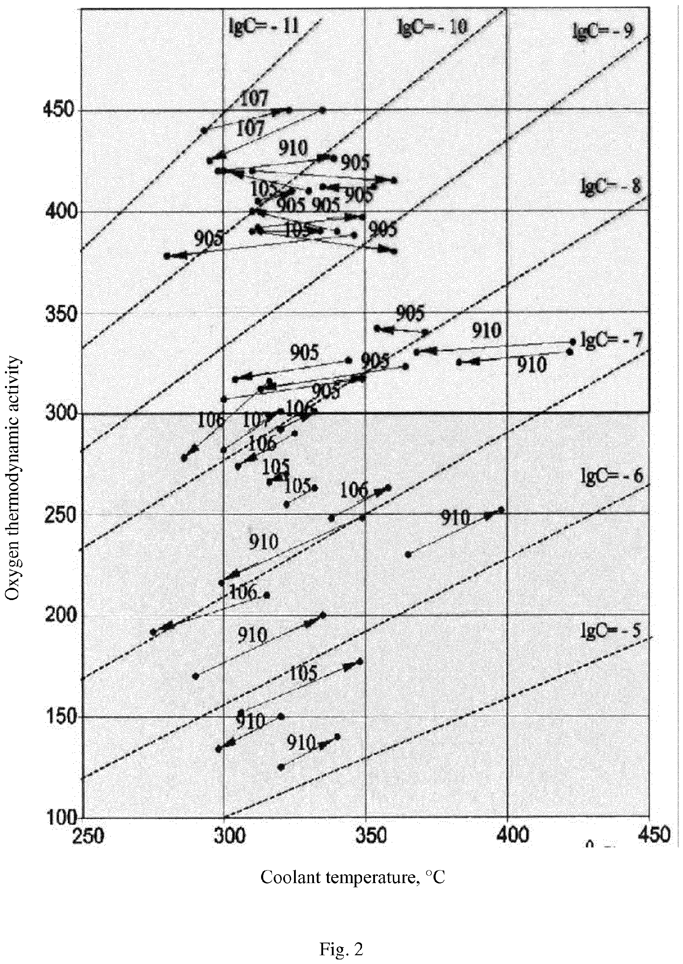

The invention is disclosed with the drawing, where Fig. 1 shows a nuclear reactor with oxygen thermodynamic activity monitoring system with liquid-metal coolant, and Fig. 2 - shows a diagram of oxygen thermodynamic activity sensors readings versus lead-bismuth coolant temperature in BM-40A and OK-550 plants.

### Embodiment

Nuclear reactor with liquid-metal coolant has a housing 1 with active zone 2 located below coolant level with a protective tube 3 with a channel 4 for placing a sensor located above the zone. The reactor housing 1 contains steam generators 5 and circulation pumps 6; the cover gas is located in its upper part.

The coolant oxygen thermodynamic activity monitoring system includes a permanent oxygen thermodynamic activity sensor 7 fitted with sensory element 8 immersed in the liquid-metal coolant layer in the central "hot" part of the reactor housing 1 in the channel 4 of the protective tube 3. Sensor 7 is connected to a single measuring unit (not shown).

Oxygen thermodynamic activity sensor 9 of the monitoring system is fitted with sensory element 10 located in the liquid-metal coolant layer in the peripheral "cold" part of the reactor housing 1. Sensor 9 is connected to a single measuring unit (not shown).

Additional oxygen thermodynamic activity sensor 11 of the monitoring system is located above the liquid-metal coolant layer and installed in such manner that its sensory element 12 can move below coolant level by vertical movement mechanism 13 which can be built by any means suitable for this purpose. Sensor 11 is also connected to a single measuring unit (not shown).

Measurements intervals of oxygen thermodynamic activity by an additional sensor 11 are determined in each case by experiment, in average, once or twice a month.

A nuclear reactor with oxygen thermodynamic activity monitoring system operates and monitoring is performed as follows:
Melted coolant heated in the reactor core 3 flows to steam generators 5 under head of pumps 6, and transfers thermal energy quickly to water steam. During reactor operation numerical values of oxygen thermodynamic activity in "hot" and "cold" areas of the reactor housing 1 are determined by oxygen thermodynamic activity sensors 7 and 9. Measurements data are transferred to a single measuring unit. After that, the dependence of temperature on oxygen thermodynamic activity is determined and compared with the tabulated values, this permits to understand liquid-metal coolant condition in the reactor, for example, the presence of impurities formed in coolant as a result of its interaction with structural steels.

In case of deviation of the measured parameters from the preset ones, the concentration of dissolved oxygen in coolant is maintained by dissolution of the coolant components oxides; they are preliminarily added to the circuit, or they are made by means of crystallization from the coolant and accumulation on the filter.

This is how constant monitoring of maintaining preset values of oxygen thermodynamic activity in coolant at any specified operation mode is achieved.

As it was previously mentioned the value of oxygen thermodynamic activity in coolant during the plant operation should be within the range that ensures the integrity of oxide passivation films on the surfaces of structural materials, i.e. their resistance to corrosion, on the one hand, and absence of slag deposits on inner surfaces of the reactor circuit elements on the other hand, for all non-isothermal circuit areas.

During the extended operation of nuclear reactors with a circulating liquid-metal coolant circuit oxygen dissolved in the coolant is continuously consumed for binding impurities of structural materials components (iron, chromium) that diffuse into the melt and have greater chemical affinity for oxygen than coolant components.

It can lead to reduction of dissolved oxygen concentration to the value when protective oxide coatings start to degrade, that means quick increase of corrosion. That is why one of the most important parameters that characterizes the quality of circulation circuits with lead-based liquid-metal coolant operation is oxygen thermodynamic activity dissolved in the melt that must be monitored permanently.

In accordance with this invention, in case of permanent sensors operation failure or suspicion of their failure, measurements are performed by oxygen thermodynamic activity sensor 11 (that has monitoring and reserve function). The measurements are performed periodically, once or twice a month, in order to compare them with readings of sensors 7 and 9, or to be able to measurements of oxygen thermodynamic activity in case of their failure.

Thus, reliability of the nuclear reactor operation as well as the accuracy of the received information about physical and chemical processes in its flow section increases. Location of permanent oxygen thermodynamic activity sensors in "hot" and "cold" parts of the reactor housing and availability of additional intermittent oxygen thermodynamic activity sensor permit to get timely information without usual change of the reactor operation mode.

The use of this invention provides the means to extend service life of steel circulation circuit of a nuclear reactor with liquid-metal coolant and to prevent formation of slag deposits and improve efficiency of filter elements used in the circuits.

Fig. 2 shows oxygen thermodynamic activity sensors readings versus temperature of lead-bismuth coolant curve; it is used to illustrate the description of the invention, specific changes of oxygen thermodynamic activity sensors readings in lead-bismuth circulation circuits of various nuclear power plants.

## Claims

1. A nuclear power reactor with liquid-metal coolant, that includes a housing (1) with an active zone (2) located below coolant level, steam generators, circulation pumps and a system of liquid-metal lead or lead-bismuth coolant condition nonitoring containing a monitoring element located in the reactor, connected to a measuring unit; the nonitoring element of the system representing oxygen thermodynamic activity sensors (7,8,9,10) located in the central and peripheral parts of the reactor housing, the sensory elements of which are located in liquid-metal lead or lead-bismuth oolant layer, and an additional oxygen thermodynamic activity sensor (11, 12) being located above liquid-metal lead or lead-bismuth coolant and installed so that it can be periodically immersed into the coolant.

2. A reactor in accordance with claim 1, **characterized by** additional oxygen thermodynamic activity sensor located above oolant level fitted with a vertical movement mechanism (13).

3. A reactor in accordance with claim 1, **characterized by** additional oxygen thermodynamic activity sensor positioned in the central part of the reactor housing.

4. A reactor in accordance with claim 1, **characterized by** solid electrolyte sensors used as oxygen thermodynamic activity sensors.

5. Method of oxygen thermodynamic activity monitoring in a nuclear power reactor according to claim 1, which is performed by means of measuring oxygen thermodynamic activity in coolant and data transmission to the measuring unit, where the measurements in the central "hot" part and periphery "cold" parts of the reactor housing are carried out constantly, and additional periodic measurements of oxygen thermodynamic activity are performed in the central "hot" part of the reactor.

6. Monitoring method according to claim 5, **characterized in that** additional measurements of oxygen thermodynamic activity in the central part of the reactor are carried out once or twice a month.

## Patentansprüche

1. Der Leistungsreaktor mit einem Flüssigmetall-Wärmeträger, der das Gehäuse mit der Spaltzone, das sich niedriger, als der Wärmeträger befindet, sowie Dampferzeuger, Zirkulationspumpen und Kontrollsystem für den Zustand des Blei-Bismut-Flüssigmetall -Wärmeträgers enthält, das den sich im Reaktor befindenden und an den Messblock angeschlossenen Kontrollelement enthält. Bei dem Kontrollelement handelt es sich um die Fühler der thermodynamischen Aktivität des Sauerstoffs, die im zentralen Teil und im Randteil des Reaktorgehäuses platziert sind und deren Aufnahmeelemente sich im Schicht des Blei-Flüssigmetall-Wärmeträger oder des Blei-Bismut-Flüssigmetall-Wärmeträger befinden, sowie um einen zusätzlichen Fühler der thermodynamischen Aktivität des Sauerstoffs, der über dem Blei-Flüssigmetall-Wärmeträger oder Blei-Bismut-Flüssigmetall-Wärmeträger so platziert ist, dass er gelegentlich in den Wärmeträger getaucht werden kann.

2. Reaktor zum Punkt 1, der **dadurch gekennzeichnet** wird, dass die Menge der Fühler der thermodynamischen Aktivität des Sauerstoffes, deren Aufnahmeelemente sich im Schicht des Blei-Flüssigmetall-Wärmeträger oder des Blei-Bismut-Flüssigmetall-Wärmeträger befinden, nicht weniger als 2 beträgt.

3. Reaktor zum Punkt 1, der **dadurch gekennzeichnet** wird, dass der zusätzliche Fühler der thermodynamischen Aktivität des Sauerstoffs, der sich über dem Niveau des Wärmeträgers befindet, mit dem Mechanismus der senkrechten Versetzung ausgerüstet ist.

4. Reaktor zum Punkt 1, der **dadurch gekennzeichnet** wird, dass der zusätzliche Fühler der thermodynamischen Aktivität des Sauerstoffs sich im Zentralteil des Reaktorgehäuses befindet.

5. Die Überwachungsmethode der thermodynamischen Aktivität des Sauerstoffs im Kernreaktor mit dem Flüssigmetall-Wärmeträger, der im Punkt 1 beschrieben wurde, durch die Messung der thermodynamischen Aktivität des Sauerstoffs im Wärmeträger und Übertragung der Daten an den Messblock, wobei die Messungen im zentralen "heißen" Teil und in den "kalten" Randteilen des Reaktorgehäuses permanent durchgeführt werden und die zusätzlichen gelegentlichen Bemessungen der thermodynamischen Aktivität des Sauerstoffs im "heißen" zentralen teil des Reaktors durchgeführt werden.

6. Die Überwachungsmethode zum Punkt 5, die **dadurch gekennzeichnet** wird, dass die zusätzlichen Bemessungen der thermodynamischen Aktivität des Sauerstoffs im zentralen Teil des Reaktors ein oder 2 Mal pro Monat durchgeführt werden.

## Revendications

1. Le réacteur nucléaire énergétique à métal réfrigérant liquide, qui inclut le corps avec la zone active, placé au-dessous du niveau de l'agent réfrigérant, les générateurs de vapeur, les pompes de circulation et le système pour le contrôle de l'état du métal réfrigérant liquide (plombeux ou bismuthique), contenant l'élément de contrôle, placé dans le réacteur, couplé au bloc de mesurage ; étant cependant précisé que l'élément de contrôle du système est constitué des capteurs de l'activité thermodynamique de l'oxygène, placés dans la partie centrale et périphérique du corps du réacteur, dont les organes sensibles sont placés dans la couche du métal réfrigérant liquide (plombeux ou bismuthique), aussi que du capteur supplémentaire de l'activité thermodynamique de l'oxygène, placé au-dessus du métal réfrigérant liquide (plombeux ou bismuthique) et fixé d'une telle manière, pour qu'on puisse le plonger périodiquement dans le métal réfrigérant liquide.

2. Le réacteur décrit selon le point 1, qui est **caractérisé par** ce, que le nombre des capteurs de l'activité thermodynamique de l'oxygène, dont les organes sensibles sont placés dans la couche du métal réfrigérant liquide (plombeux ou bismuthique), fait non moins que deux capteurs.

3. Le réacteur décrit selon le point 1, qui est **caractérisé par** ce, que le capteur supplémentaire de l'activité thermodynamique de l'oxygène, placé au-dessus du métal réfrigérant liquide, est doté du mécanisme du déplacement vertical.

4. Le réacteur décrit selon le point 1, qui est **caractérisé par** ce, que le capteur supplémentaire de l'activité thermodynamique de l'oxygène est placé dans la partie centrale du corps du réacteur.

5. Le procédé du monitoring de l'activité thermodynamique de l'oxygène dans le réacteur nucléaire à métal réfrigérant liquide, décrit dans le point 1, qui est réalisé par voie du mesurage de l'activité thermodynamique de l'oxygène dans l'agent réfrigérant et par voie de la transmission des données dans le bloc de mesurage, au cours duquel les mesurages dans la partie centrale « chaude » et dans les parties périphériques « froides » du corps du réacteur sont effectués en permanence, et au cours duquel on effectue les mesurages supplémentaires périodiques de l'activité thermodynamique de l'oxygène dans la partie centrale « chaude » du réacteur.

6. Le procédé du monitoring décrit selon le point 5, qui est **caractérisé par** ce, que les mesurages supplémentaires de l'activité thermodynamique de l'oxygène dans la partie centrale du réacteur sont réalisés une ou deux fois par mois.
